# EUROPÄISCHE PATENTANMELDUNG

(11) **EP 1 900 609 A2**
(43) Veröffentlichungstag der Anmeldung: **19.03.2008**
(21) Anmeldenummer: 07011528.2
(22) Anmeldetag: 13.06.2007
(51) Int. Cl.: B62D 13/00

(54) **Dolly-achse**

(30) Priorität: 15.09.2006 DE 102006044206
(71) Anmelder: Fahrzeugwerk Bernard Krone GmbH, 48480 Spelle (DE)
(72) Erfinder: Krone, Bernhard, Dr., 48480 Spelle (DE); Evers, Heinz, 49733 Haren (DE)
(74) Vertreter: Pott, Ulrich

(57) **Zusammenfassung**

Die Erfindung betrifft eine Dolly-Achse 2 mit einer an einem Rahmen 4 um eine vertikale Achse 14 drehbeweglich befestigten Zugdeichsel 6 und einer auf der Oberseite des Rahmens 4 angeordneten Sattelkuppel 8 sowie zumindest einem Radsatz 12, der von der Schwenkbewegung der Zugdeichsel 6 übertragenen Übertragungsmitteln lenkbar ist, wobei vorzugsweise als Übertragungsmittel zumindest ein Schaltlenker 18 vorgesehen ist, mit dem die Schwenkbewegung der Zugdeichsel 6 auf wenigstens einen auf den lenkbaren Radsatz 12 wirkenden Lenkhebel 16 übertragbar und vorzugsweise die Lage des Schaltlenkers 18 durch angetriebene Stellmittel veränderbar ist, wobei eine Rückfahrsperre 50 vorgesehen ist.

## Beschreibung

Die Erfindung betrifft eine Dolly-Achse mit einer an einem Rahmen um eine vertikale Achse drehbeweglich befestigten Zugdeichsel und einer auf der Oberseite des Rahmens angeordneten Sattelkuppel sowie zumindest einem Radsatz, der von die Schwenkbewegung der Zugdeichsel übertragenen Übertragungsmitteln lenkbar ist, wobei vorzugsweise als Übertragungsmittel zumindest ein Schaltlenker vorgesehen ist, mit dem die Schwenkbewegung der Zugdeichsel auf wenigstens einen auf den lenkbaren Radsatz wirkenden Lenkhebel übertragbar ist und insbesondere die Lage des Schaltlenkers durch angetriebene Stellmittel veränderbar ist.

Eine derartige Dolly-Achse ist aus der EP 1 466 813 B bekannt. Bei dieser Dolly-Achse sind als Übertragungsmittel einen Schaltlenker aufweisende Zwischenhebel vorgesehen, mit denen die Schwenkbewegung der Zugdeichsel auf Lenkhebel, die auf den lenkbaren Radsatz wirken, übertragen werden können. Die Lage der Zwischenhebel ist durch angetriebene Stellmittel veränderbar, so daß die sich bei Lenkbewegungen zwangsläufig ergebende Schwenkbewegung der Zugdeichsel dazu genutzt werden kann, über den Schaltlenker einen Lenkeinschlag eines lenkbaren Radsatzes einzuleiten.

Anstelle von aufwändigen und defektanfälligen Sensoren, motorischen Antrieben und Getriebe können bei dieser vorbekannten Dolly-Achse einfache mechanische Komponenten eingesetzt werden, wobei durch die Schwenkbewegung der Zugdeichsel ein Lenkwinkel vorgegeben ist, der von den Schaltlenkern entsprechend auf den lenkbaren Radsatz übertragen wird. Durch die Übertragung der Lenkbewegung der Zugdeichsel auf einen lenkbaren Radsatz kann der auf der Dolly-Achse aufliegende Anhänger in einem günstigen, von den Lenkbewegungen beeinflußten Radius um eine von der Zugmaschine gefahrene Kurve herumbewegt werden. Durch die Lenkung der Dolly-Achse sind insgesamt kleinere Wenderadien ermöglicht.

Durch eine Veränderung der Lage des Schaltlenkers wird die Geometrie der Übertragungsmittel verändert. Bei Lenkbewegungen ergeben sich in unterschiedlichen Stellpositionen des Schaltlenkers unterschiedlich starke Lenkbewegungen bei gleichem Einschlagwinkel der Zugdeichsel. In einer Schaltposition des Schaltlenkers können also beispielsweise bei niedrigen Rangiergeschwindigkeiten von der Zugdeichsel geringere Lenkbewegungen auf einen lenkbaren Radsatz übertragen werden, während in einer anderen Schaltposition des Schaltlenkers bei beispielsweise höheren Geschwindigkeiten die von der Zugdeichsel übertragenen Stellwege bei gleichem Winkel der Zugdeichsel größer sind. Bei der vorbekannten Dolly-Achse ist es daher möglich, mit kostengünstigen Stellelementen geschwindigkeitsabhängig unterschiedlich starke Lenkimpulse auf einen lenkbaren Radsatz zu übertragen.

Es ist Aufgabe der vorliegenden Erfindung, enie solche bekannte Dolly-Achse weiter zu verbessern.

Hier setzt die vorliegende Erfindung an, der die Aufgabe zugrunde liegt, bei Beibehaltung der Vorteile der vorgenannten Dolly-Achse Rückwärtsfahrten zu vereinfachen.

Zur Lösung dieser Aufgabe zeichnet sich die Dolly-Achse der eingangs genannten Art dadurch aus, daß eine Rückfahrsperre vorgesehen ist.

Erfindungsgemäß ist eine Rückfahrsperre vorgesehen, bei der über eine mit der Zugdeichsel verbindbare federbelastete Rückfahrsperrklaue die Zugdeichsel verriegelbar ist, und zwar in ihrer Neutralstellung. Diese Rückfahrsperre kann über einen Zylinder zu betätigen sein. Des weiteren kann vorgesehen sein, daß die Zugdeichsel höhenverstellbar mit dem Rahmen verbindbar ist, wozu eine Befestigungsanordnung mit übereinander angeordneten Befestigungslöchern vorgesehen ist. Die Rückfahrsperre zeichnet sich durch ihre einfache Bauart, ihren geringen Platzbedarf, ihre Standardbauten und ihre einfache Bedienbarkeit aus, und kann ohne weiteres vom Fachmann aktiviert werden. Über eine Feder ist eine Rückholfunktion darzustellen, so daß bei Betriebsausfällen die Rückfahrsperre zu entriegeln ist.

Damit ist eine Dolly-Achse zur Verfügung gestellt, bei der Schlingerbewegungen und auch ein Aufschaukeln der Fahrzeugkombination insgesamt wesentlich zu reduzieren sind. Der Dämpfer ist immer im Einsatz, so daß es auch bei unterschiedlichen Einschlagwinkeln der Zugdeichsel immer einen gedämpften Zustand der Zugdeichsel gibt. Vorzugsweise sind zwei Dämpfer vorgesehen, die jeweils in Fahrtrichtung rechts und links - bezogen auf die Mittelstellung der Zugdeichsel - an dieser einenends angreifen und sich anderenends am Rahmen abstützen.

Bevorzugtermaßen ist der jeweilige Dämpfer ein Bauteil, das eine Gewindestange, einen Mitnehmertopf, ein Gehäuse sowie eine innenliegende Feder aufweist, wobei die Gewindestange relativ zum Mitnehmertopf und dem Gehäuse sowie der Mitnehmertopf relativ zu dem Gehäuse beweglich sind. Damit lassen sich verschiedene Stellungen für die Zugdeichsel einnehmen, nämlich einmal eine Mittelstellung, in der keine Kraft aufgebaut ist, und jeweilige Endstellungen mit eingeschobenem Mitnehmertopf und eingezogener Gewindestange und einer jeweils ausgezogenen Position der Gewindestange bei innenseitige Verlagerung des Mitnehmertopfes mitsamt der Feder und selbstverständlich entsprechende Zwischenstellungen. In der Neutralstellung, also der Mittelstellung der Zugdeichsel, ist das Lager der Gewindestange unbelastet, wobei es in den jeweiligen Endstellungen zu einer Belastung an der Gewindestange in den entsprechenden Lagerstellen kommt, die etwaigen Schlingerbewegungen entgegenwirkt.

Des weiteren ist bevorzugterweise die Sattelplatte hinsichtlich ihrer Drehbewegung bzw. hinsichtlich ihrer Rotation begrenzt. Die Sattelplatte bzw. die Sattelkuppel ist drehbar gelagert, damit durch eine Reibung zwischen Sattelkuppel und Sattelauflieger geringe Reibungskräfte anfallen. Größere auftretende Reibungskräfte würden ein Aufschaukeln der Fahrzeugkombination bewirken. Durch eine vorgesehene Spurstange bzw. Lenkstange ist der Kupplungsvorgang ohne manuelle Eingriffe möglich. Dabei ist die Verwendung von Standardachsen möglich. In Kombination mit dem Lenkungsdämpfer und der drehbaren Sattelkuppel ist ein Aufschaukeln wirksam verhindert. Durch die Dämpfer, die beidseits der Zugdeichsel angreifen, ist auch eine Rückstellung der Zugdeichsel in die Neutralstellung möglich. Vorteilhafterweise ist ebenfalls noch ein Endanschlag an dem Rahmen vorgesehen, um die maximale Auslenkung der Zugdeichsel zu begrenzen.

Bevorzugtermaßen ist bei der Dolly-Achse eine Lenkgeometrie realisiert, bei der eine Lenkwinkelkorrektur durchgeführt werden kann, und zwar in Zusammenwirken mit dem Lenkungsdämpfer und der drehbaren Sattelkuppel. Dabei wird der Lenkwinkel der innen- und außenliegenden Räder an die real vorhandenen Winkel der Kurven bzw. Kreisfahrt angepaßt. Damit geht ein geringerer Reifenverschleiß sowie eine Rollwiderstandsminimierung einher. Dazu ist in vorteilhafter Weise ein Verstellhebel vorgesehen, an dem ein Lenkhebel gelenkig angreift, der seinerseits gelenkig mit dem Schaltlenker verbunden ist. Aufgrund der dabei vorgesehenen Abstandsverhältnisse der Anlenkpunkte kann die entsprechende Lenkwinkelkorrektur durchgeführt werden.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: Seitenansicht eines Ausführungsbeispiels einer Dolly-Achse,
- Fig. 2: eine Draufsicht auf das Ausführungsbeispiel nach Fig. 1 in der Neutralstellung der Zugdeichsel,
- Fig. 3: eine Ansicht von oben auf das Ausführungsbeispiel nach Fig. 1 mit eingeschlagener Zugdeichsel;
- Fig. 4: einen Ausschnitt der Darstellung nach Fig. 2 ohne Darstellung von Dämpferelementen, aber mit Darstellung einer Lenkwinkelkorrektur,
- Fig. 5: eine zu Fig. 4 analoge Darstellung mit eingeschlagener Zugdeichsel,
- Fig. 6: in einer teilweise geschnittenen Querschnittsdarstellung ein Ausführungsbeispiel eines Dämpferelementes im ausgezogenen Zustand,
- Fig. 7: das Ausführungsbeispiel nach Fig. 6 in Neutralstellung der Zugdeichsel,
- Fig. 8: das Ausführungsbeispiel nach den Fig. 6 und 7 im eingeschobenen Zustand des Dämpfers,
- Fig. 9: eine Ansicht von vorne auf die Dolly-Achse mit eingerasteter Rückfahrsperrklaue, und
- Fig. 10: eine zu Fig. 9 analoge Darstellung mit entriegelter Rückfahrsperrklaue.

In der Zeichnung sind grundsätzlich gleichwirkende Teile mit übereinstimmenden Bezugsziffern bezeichnet.

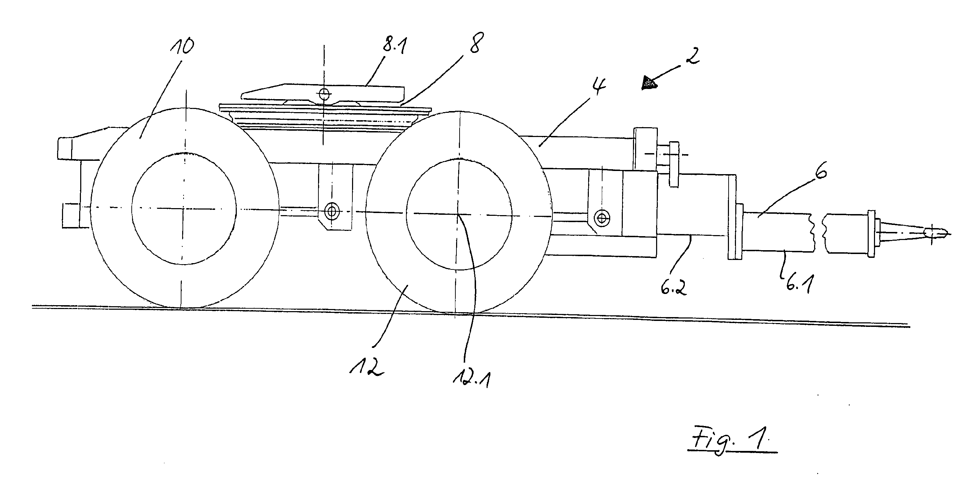

In Fig. 1 ist eine Seitenansicht einer Dolly-Achse 2 ersichtlich. Die Dolly-Achse 2 weist einen Rahmen 4, eine Zugdeichsel 6, eine Sattelkupplung 8, einen lenkbaren Radsatz 10 und einen nicht lenkbaren Radsatz 12 auf. Die Zugdeichsel 6 ist zweigeteilt ausgebildet und hat einen vorderen Zugdeichselteil 6.1 und einen hinteren, mit dem Rahmen 4 verbundenen Zugdeichselteil 6.2. Die Zugdeichsel 6 ist mit ihrem vorderen Ende an einer Anhängekupplung eines Zugfahrzeuges anhängbar. Die Form der Zugdeichsel ist nicht auf die im Ausführungsbeispiel gezeigte Ausführung beschränkt, sondern kann auch andere Formgestaltungen aufweisen, wie beispielsweise eine Schwanenhalsdeichsel. Ein Sattelaufliegeranhänger kann mit der Sattelkupplung 8 fest verbunden werden. Auf diese Weise ist es möglich, ein Gespann bzw. eine Fahrzeugkombination zu realisieren, dessen Gesamtlänge bis zu 25 Metern betragen kann. Neben dem Laderaum des Sattelaufliegeranhängers kann der entsprechende Lastzug über zusätzlichen Laderaum verfügen, der beispielsweise auf dem Zugfahrzeug angeordnet ist.

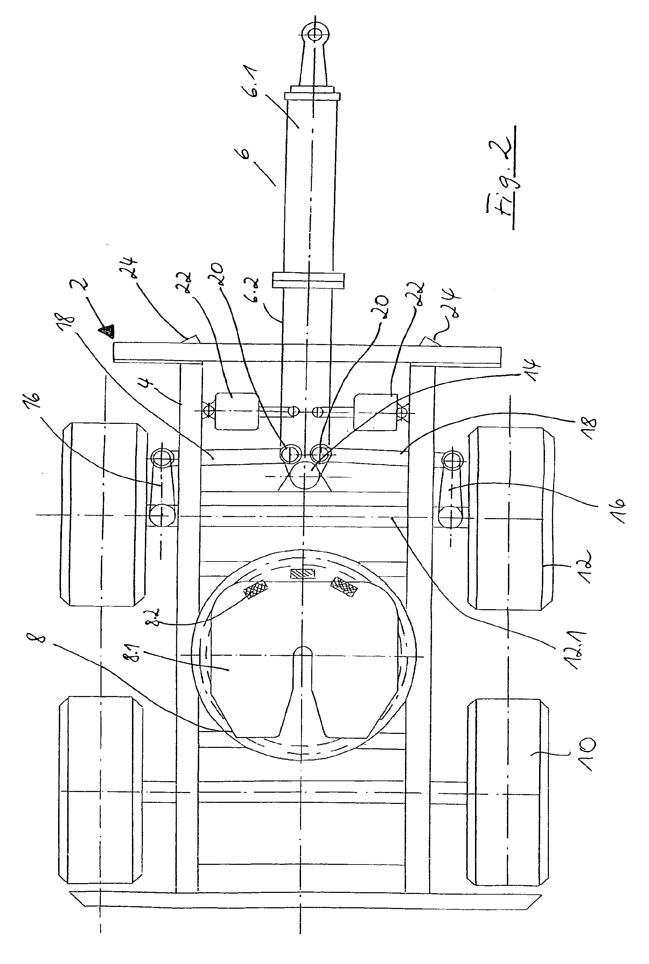

Die Zugdeichsel ist um eine Schwenkachse 14 schwenkbar, wie dies näher aus Fig. 2 hervorgeht. In dieser Fig. 2 ist die Dolly-Achse 2 aus einer Ansicht von oben zu sehen, und zwar in einer Stellung, in der sich für eine Geradeausfahrt die Zugdeichsel 6 mit ihrem vorderen Teil 6.1 und ihrem hinteren Teil 6.2 in ihrer Neutralstellung befindet. Durch die Zweiteiligkeit der Zugdeichsel ist die einfache Möglichkeit geschaffen, das Fahrzeug sowohl für Tief- als auch für Normalkuppelhöhen auszurüsten.

Die Sattelkupplung 8 ist etwa mittig zwischen dem lenkbaren Radsatz 10 und dem nicht lenkbaren Radsatz 12 angeordnet. Im Ausführungsbeispiel ist die Dolly-Achse 2 also als Zweiachsausführung gezeigt, kann aber auch als Einachs- oder mehr als zwei Achsen entsprechend ausgerüstet und eingesetzt werden.

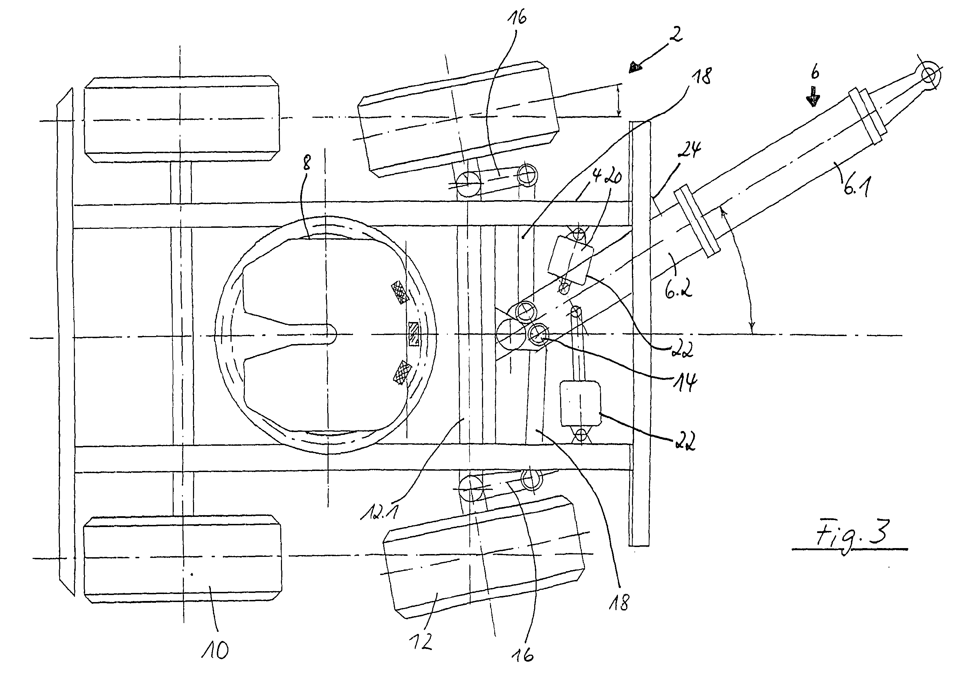

In den Fig. 2 und 3 sind die Lenkhebel 16 ersichtlich, an denen im einzelnen nicht gezeigte Übertragungsmittel angreifen. Diese sind beabstandet zur Drehachse des Lenkgelenks angeordnet, um einen Hebelweg für die Verstellung des Lenkeinschlages nutzen zu können. Die Übertragungsmittel bestehen im Ausführungsbeispiel aus einem Schaltlenker 18 bzw. einer Spurstange 18. Für jede Radseite ist ein entsprechender Schaltlenker 18 vorgesehen, der gelenkig bei 20 an der Zugdeichsel 6 angreift. Jeweils in Fahrtrichtung F den Schaltlenkern 18 vorgeordnet sind jeweils zwei Dämpfer 22, die einerseits gelenkig an dem Rahmen 4 und andererseits gelenkig an der Zugdeichsel 6 angreifen. Für die Zugdeichsel 6 ist am Rahmen 4 jeweils ein Endanschlag 24 vorgesehen. Diese Lenkdeichselanschläge 24 verhindern ein zu starkes Einlenken einer Fahrzeugkombination. Diese können auch so ausgerüstet werden, daß bei einem Anschlag der Zugdeichsel 6 an dem Anschlag 24 ein optisches oder akustisches Signal erzeugt wird für eine entsprechende Fahrerinformation.

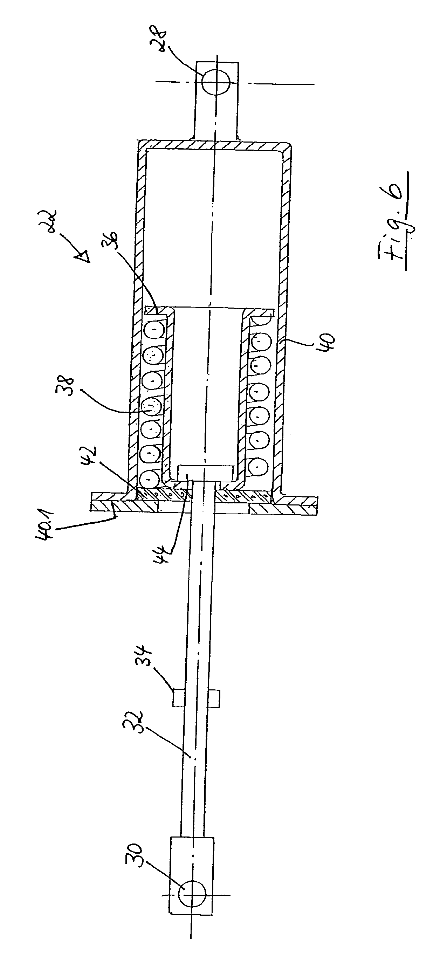

In Fig. 3 ist eine maximal eingeschlagene Zugdeichsel 6 bei ansonsten analogem Aufbau wie in dem Ausführungsbeispiel nach Fig. 2 veranschaulicht. Die Zugdeichsel 6 befindet sich am in der Zeichnung oberen Anschlag 24. Im gezeigten Ausführungsbeispiel entspricht dies einem Zugdeichselmaximalwinkel von 33°. Über den Lenkhebel 16 und den Schaltlenker 18 ist die Zugdeichselbewegung auf den lenkbaren Radsatz 12 übertragen worden. Die Zugdeichsel ist dabei gegen die an dieser angreifenden Dämpfer 22 bewegt worden, so daß der in Fig. 3 obere Dämpfer 22 eingefahren ist und der in der Fig. 3 untere Dämpfer 22 ausgefahren ist. Diese entsprechenden Dämpfstellungen sind in den Fig. 6, 7 und 8 näher veranschaulicht, worauf noch einzugehen ist.

Wie ebenfalls aus den Fig. 2 und 3 ersichtlich ist, hat die auf dem Rahmen 4 angeordnete Sattelkuppe 8 eine drehbare Sattelplatte 8.1, die mit Rotationsanschlägen 8.2 zusammenwirkt. Diese wirken als Endanschläge und minimieren die Reibung zwischen Sattelkupplung und einem Sattelauflieger. Dadurch wird ein Schlingern und Aufschaukeln der Fahrzeugkombination verhindert. Durch die Sattelkupplungsendanschläge 8.2 kann der Kuppelvorgang ohne manuellen Eingriff erfolgen, da der mögliche Verdrehwinkel so gewählt ist, daß beim Kuppeln von Sattelauflieger mit der Dolly-Achse die Zentrierhilfe der Sattelkupplung ohne manuellen Eingriff durch den Fahrer, z.B. durch ein Festsetzen der Sattelkupplung, den üblicherweise vorgesehenen Königszapfen korrekt führt und somit eine sichere und korrekte Verbindung hergestellt werden kann.

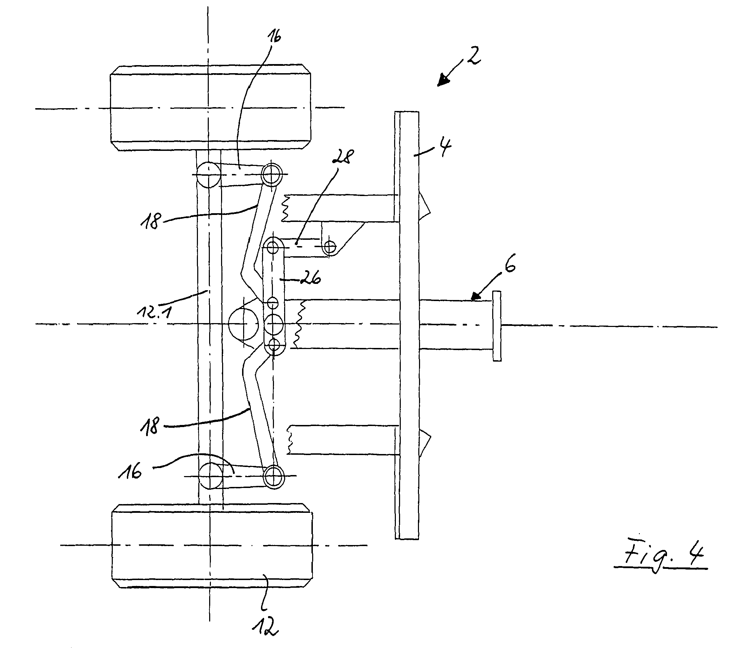

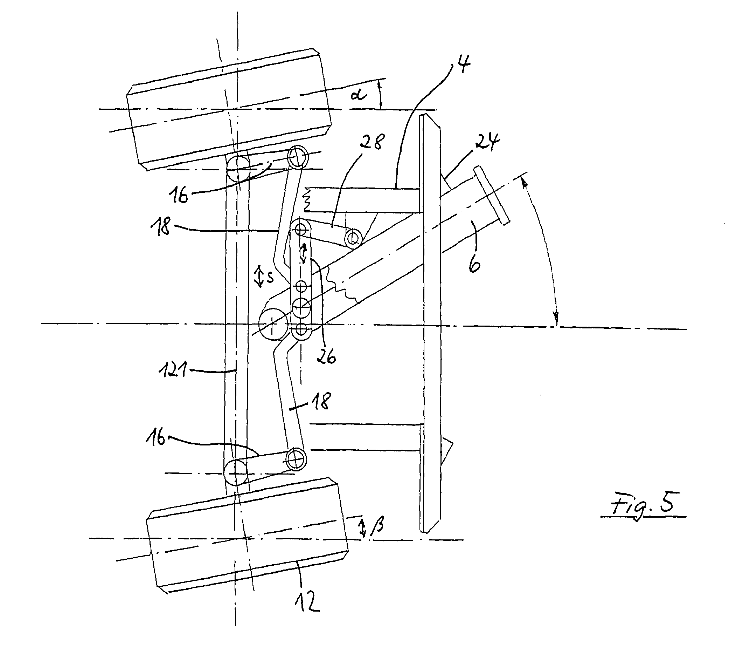

In Fig. 4 und 5 ist ausschnittsweise ein alternatives Ausführungsbeispiel zu den Ausführungsbeispielen nach Fig. 1 bis 3 dargestellt. Hier sind entsprechende Dämpfer nicht eingezeichnet, können und sollen aber bevorzugt dort vorgesehen werden. Zusätzlich ist hier eine Lenkgeometrie mit einer Lenkwinkelkorrektur dargestellt. Dazu ist der Schalthebel 18 bzw. die Spurstange 18 gelenkig mit einem Verstellhebel 26 verbunden, der wiederum gelenkig bei 26.1 mit der Zugdeichsel 6 und gelenkig bei 28.1. mit einem Lenkkorrekturhebel 28 verbunden ist, der seinerseits an dem Rahmen 4 angelenkt ist. Die Gelenkstellen 26.1 und 28.1. können verstellbar ausgebildet sein. In Fig. 4 ist die Neutralstellung der Zugdeichsel 6 dargestellt, wohingegen in Fig. 5 die Zugdeichsel am oberen Anschlag 24 liegt und sich in ihrer maximal verschwenkten Lage befindet. Bei der in Fig. 5 ersichtlichen Kurvenfahrt beträgt der obere Winkel α ca 10° und der unteren Winkel β ca 8°. Der Verstellhebel ist um ein Maß S von ca. 80 mm verstellbar, wodurch eine integrierte Lenkwinkelkorrektur von +/- 2° ermöglicht ist, um den Lenkwinkel der innen und außen liegenden Lenkwinkel an die Radien der Kurvenfahrt anzupassen. Dadurch ergibt sich ein geringerer Reifenverschleiß, ein geringerer Rollwiderstand, ein geringerer Verbrauch, eine geringere Belastung der Achsen und der Lenkeinrichtung z.B. in den Lagerstellen und der Spur- und Lenkstangen, wobei die Lenkwinkelkorrektur an Einsatzorte und an Einsatzgebiete anpaßbar ist. Dies ist durch die gewählte Lösung auf eine baulich sehr einfache Art realisiert.

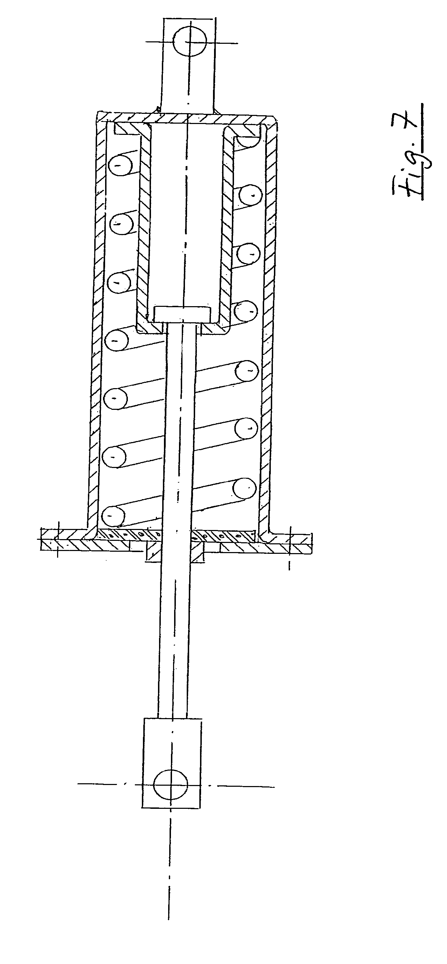

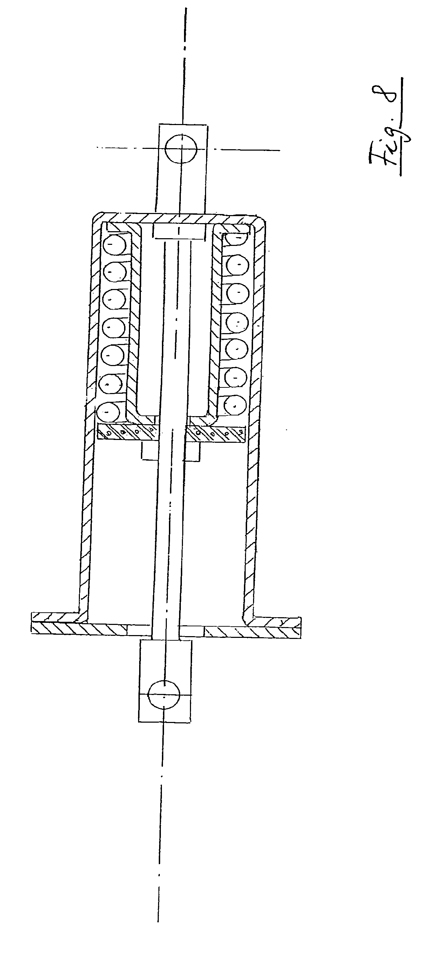

In den Fig. 6 bis 8 ist im einzelnen näher ein Ausführungsbeispiel eines Dämpfers 22 dargestellt. Fig. 6 zeigt den durch die Zugdeichselbewegung ausgezogenen Dämpfer. Dies entspricht der Stellung des in Fig. 3 unteren Dämpfers 22. Der Dämpfer 22 hat Lagerstellen 28 und 30 sowie eine Gewindestange 32 mit einer Mutter 34. Des weiteren ist ein Mitnehmertopf 36 vorgesehen, der von einer Feder 38 belastet werden kann, die sich ihrerseits in den umgebogenen Enden des Mitnehmertopfes 36 einenends abstützt. Dieser Mitnehmertopf mit der Feder 38 ist in dem Gehäuse 40 des Dämpfers geführt. Des weiteren durchsetzt die Gewindestange eine Mitnehmerscheibe 42, an der sich anderenends die Feder 38 abstützt. Die Mitnehmerscheibe 42 stützt sich ihrerseits an den umgebogenen Enden des Mitnehmertopfes 36 ab, an der sich ebenfalls innen das Kopfende 44 der Gewindestange 32 abstützt. Durch diesen Dämpfer sollen Schlingerbewegungen des Fahrzeuges verhindert werden. Bei einem Ausziehen der Gewindestange 22 baut der Dämpfer eine Kraft auf, die der Bewegungsrichtung der Zugdeichsel 6 entgegenwirkt. Ist der Dämpfer 22 in Neutralstellung, wie in Fig. 7 dargestellt, stützt sich der Mitnehmertopf 36 an der inneren rechten Wandung des Gehäuses 40 ab. Die Feder ist entspannt, so daß die Lagerstellen 28 und 30 unbelastet sind. In Fig. 8 ist die Gewindestange eingeschoben. Dies entspricht dem in Fig. 3 oberen Dämpfer 22 in der verschwenkten Zugdeichsellage.

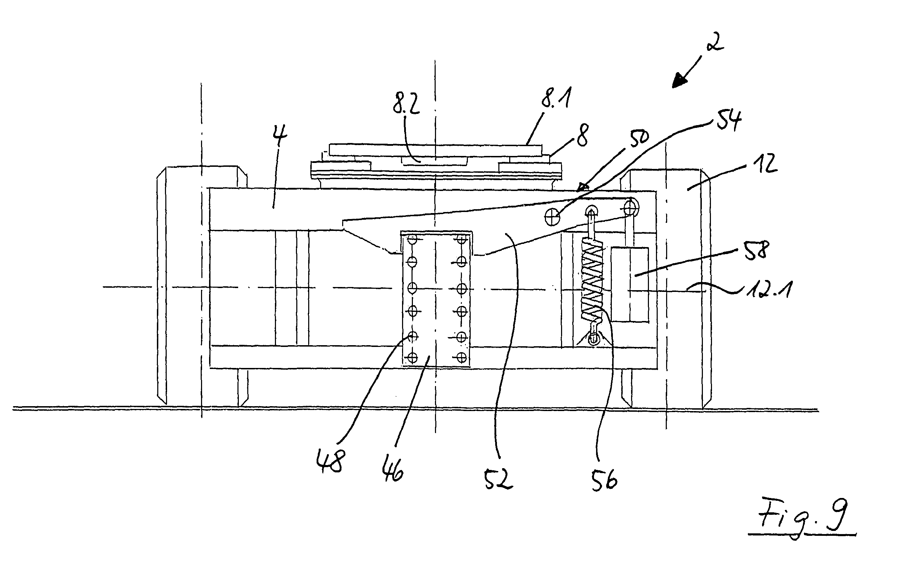

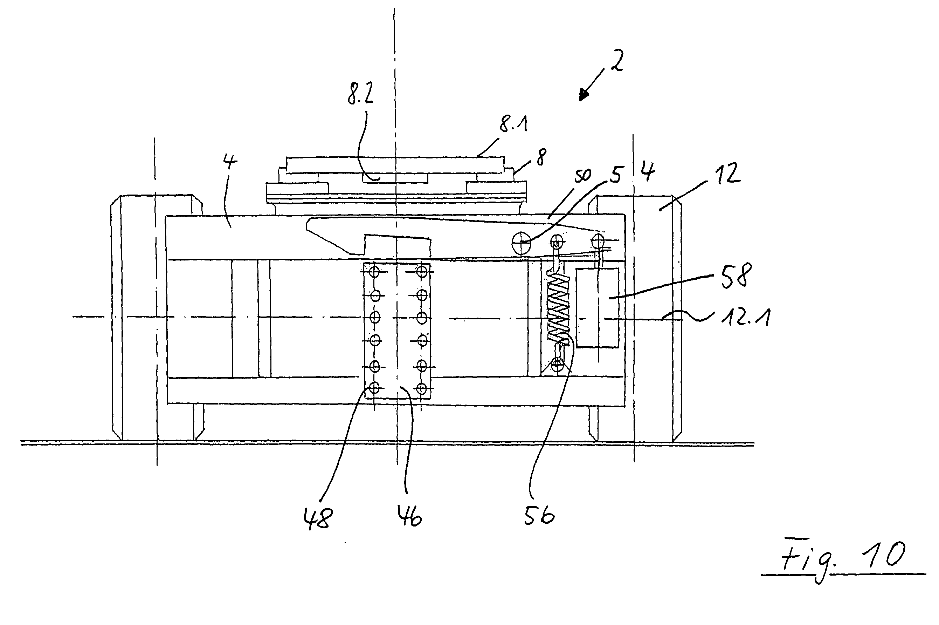

In den Fig. 9 und 10 ist die Dolly-Achse ohne Zugdeichsel in einer Ansicht von vorn dargestellt. In dieser Darstellung ist ersichtlich, daß die Dolly-Achse derart auszurüsten ist, daß die Zugdeichsel höhenveränderbar an dem Rahmen zu befestigen ist. Dazu ist ein Zugdeichselbock 46 vorgesehen, dem übereinander in paarweiser Zuordnung Löcher 48 zur Anbindung der Zugdeichsel - nicht dargestellt - in verschiedenen Höhenlagen aufweist. Dieser Zugdeichselbock 46 ist des weiteren Bestandteil einer Rückfahrsperre, die allgemein mit 50 beziffert ist. Diese Rückfahrsperre 50 weist eine verschwenkbare Rückfahrsperrklaue 52 auf, die bei 54 gelagert und von einer Feder 56 belastet ist. Über einen Pneumatikzylinder 58 ist diese in die in Fig. 9 gezeigte Verrastungsstellung zu bringen, in der die Rückfahrsperrklaue 52 den Zugdeichselbock 46 mit ihrem Maul übergreift und mithin den Zugdeichselbock 46 an einer Schwenkbewegung hindert. Damit ist die Zugdeichsel in ihrer Geradeaus- bzw. Neutralstellung zu halten. Nach entsprechender Entlastung des Pneumatikzylinders 58 ist über die Feder 56 die Rückfahrsperrklaue in ihre in Fig. 10 ersichtliche Entriegelungsstellung zu bewegen.

## Patentansprüche

1. Dolly-Achse (2) mit einer an einem Rahmen (4) um eine vertikale Achse (14) drehbeweglich befestigten Zugdeichsel (6) und einer auf der Oberseite des Rahmens (4) angeordneten Sattelkuppel (8) sowie zumindest einem Radsatz (12), der von der Schwenkbewegung der Zugdeichsel (6) übertragenen Übertragungsmitteln lenkbar ist, wobei vorzugsweise als Übertragungsmittel zumindest ein Schaltlenker (18) vorgesehen ist, mit dem die Schwenkbewegung der Zugdeichsel (6) auf wenigstens einen auf den lenkbaren Radsatz (12) wirkenden Lenkhebel (16) übertragbar und vorzugsweise die Lage des Schaltlenkers (18) durch angetriebene Stellmittel veränderbar ist, **dadurch gekennzeichnet, daß** eine Rückfahrsperre (50) vorgesehen ist.

2. Dolly-Achse nach Anspruch 1, **dadurch gekennzeichnet, daß** die Rückfahrsperre (56) eine mit der Zugdeichsel (6) verbindbare federbelastete Rückfahrsperrklaue (52) aufweist, die mit der Zugdeichsel (6) verriegelbar und entriegelbar ist.

3. Dolly-Achse nach Anspruch 2, **dadurch gekennzeichnet, daß** die Rückfahrsperre (50) über einen Zylinder (58) betätigbar ist.

4. Dolly-Achse nach einem der Ansprüche 1 bis 3, **dadurch gekennzeichnet, daß** der Zylinder (58) als einfach wirkender Pneumatikzylinder ausgebildet ist.

5. Dolly-Achse nach einem der Ansprüche 1 bis 4, **dadurch gekennzeichnet, daß** die Zugdeichsel (6) höhenverstellbar mit dem Rahmen verbindbar ist.

6. Dolly-Achse nach Anspruch 5, **dadurch gekennzeichnet, daß** die Zugdeichsel (6) an einem in unterschiedlichen Höhenlagen vorgesehene Löcher (48) aufweisenden Zugdeichselbock (46) befestigbar ist.

7. Dolly-Achse nach Anspruch 6, **dadurch gekennzeichnet, daß** die Zugdeichsel (6) über zumindest einen Dämpfer (22) an dem Rahmen (4) abstützbar ist.

8. Dolly-Achse nach einem der Ansprüche 1 bis 7, **dadurch gekennzeichnet, daß** an der Zugdeichsel (6) zwei Dämpfer (22) angreifen.

9. Dolly-Achse nach einem der Ansprüche 1 bis 8, **dadurch gekennzeichnet, daß** die Dämpfer (22) koaxial ausgerichtet sind.

10. Dolly-Achse nach einem der Ansprüche 1 bis 9, **dadurch gekennzeichnet, daß** als Dämpfer (22) ein hydraulisch oder pneumatisch arbeitendes Dämpferelement vorgesehen ist.

11. Dolly-Achse nach einem der Ansprüche 1 bis 10, **dadurch gekennzeichnet, daß** der Dämpfer (22) einen federbelasteten Mitnehmertopf (36) aufweist, in den ein mit der Zugdeichsel (6) verbindbarer Mitnehmer eingreift.

12. Dolly-Achse nach Anspruch 11, **dadurch gekennzeichnet, daß** der Mitnehmer stangenförmig ausgebildet ist.

13. Dolly-Achse nach einem der Ansprüche 1 bis 12, **dadurch gekennzeichnet. daß** der Mitnehmer als Gewindestange (32) ausgebildet ist.

14. Dolly-Achse nach einem der Ansprüche 1 bis 13, **dadurch gekennzeichnet, daß** der Dämpfer (22) eine Mitnehmerscheibe (44) aufweist, die am Dämpferdeckel (40.1) einenends abstützbar ist.

15. Dolly-Achse nach Anspruch 14, **dadurch gekennzeichnet, daß** der Dämpfer (22) ein Gehäuse (40) aufweist, an dem innenseitig ein relativ zu diesem bewegbarer Mitnehmertopf (36) und ein relativ zu diesem bewegbarer, an der Zugdeichsel (6) befestigbarer Mitnehmer abstützbar sind.

16. Dolly-Achse nach Anspruch 14 oder 15, **dadurch gekennzeichnet, daß** die auf dem Rahmen (4) angeordnete Sattelkuppe (8) eine drehbar gelagerte Sattelplatte (8.1) mit integrierten Rotationsanschlägen (8.2.) aufweist.

17. Dolly-Achse nach Anspruch 16, **dadurch gekennzeichnet, daß** die Zugdeichsel (6) zumindest zweiteilig ausgebildet ist und die Dämpfer (22) an dem rahmenseitigen Teil (6.2) der Zugdeichsel (6) angreifen.

18. Dolly-Achse nach einem der Ansprüche 1 bis 17, **dadurch gekennzeichnet, daß** für die Zugdeichsel (6) Zugdeichselanschläge (24) vorgesehen sind.

19. Dolly-Achse nach Anspruch 18, **dadurch gekennzeichnet, daß** die Zugdeichselanschläge (24) an dem Rahmen (4) befestigt sind.

20. Dolly-Achse nach einem der Ansprüche 1 bis 19, **dadurch gekennzeichnet, daß** an dem Lenkhebel (16) gelenkig ein Schalthebel (18) angreift, der an einem Verstellhebel (26) gelenkig angreift, der seinerseits über einen Lenkkorrekturhebel (28) verstellbar ist.
